(19)

Europäisches Patentamt
European Patent Office
Office européen des brevets

(11) **EP 3 068 035 A1**

(12) **EUROPEAN PATENT APPLICATION**

(43) Date of publication:
**14.09.2016 Bulletin 2016/37**

(51) Int Cl.:
**H02P 21/18** (2016.01)  **H02P 21/34** (2016.01)
**H02P 21/32** (2016.01)

(21) Application number: **16150922.9**

(22) Date of filing: **12.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.03.2015 KR 20150033414**

(71) Applicant: **LSIS Co., Ltd.**
**Gyeonggi-do 14119 (KR)**

(72) Inventor: **CHI, Min-Hun**
**Gyeonggi-do 14118 (KR)**

(74) Representative: **Zacco Sweden AB**
**P.O. Box 5581**
**114 85 Stockholm (SE)**

(54) **METHOD FOR DETECTING INITIAL MAGNETIC-POLE POSITION OF ROTOR IN PERMANENT MAGNET SYNCHRONOUS MOTOR**

(57)     The present disclosure relates to a method for detecting an initial position of a magnetic pole of a rotor included in a permanent magnet synchronous motor. The method for detecting an initial position of a magnetic pole of a rotor included in a permanent magnet synchronous motor according to an embodiment of the present disclosure comprises: generating three-phase voltage vectors to be applied onto a u-phase,, a v-phase, and a w-phase of a stator winding, applying the three-phase voltage vectors on the u-phase, the v-phase, and the w-phase of a stator winding, respectively, calculating a current difference value of the u-phase, a current difference value of the v-phase, and a current difference value of the w-phase using currents of the stator winding flowing in a magnetizing direction and in a un-magnetizing direction by applying the three-phase voltage vectors, and determining the initial position of the magnetic pole of the rotor using the current difference value of the u-phase, the current difference value of the v-phase, and the current difference value of the w-phase. The present disclosure has the advantages of exactly detecting the initial position of the magnetic pole of the rotor included in the permanent magnet synchronous motor without using a magnetic flux sensor.

FIG. 5

**EP 3 068 035 A1**

**Description**

**BACKGROUND**

1. Technical Field

The present disclosure relates to a method for detecting an initial position of a magnetic pole of a rotor included in a permanent magnet synchronous motor.

2. Description of the Related Art

A permanent magnet synchronous motor has advantages of a high efficiency, a high power factor, a low-priced maintenance cost, and the like, and hence has been used as a high performance, variable speed motor in many industrial fields. In order to control such a permanent magnet synchronous motor, an inverter system is commonly used. In order to accurately control a torque and speed of the permanent magnet synchronous motor, it is required that the inverter system should exactly locate a position of a magnetic pole of a rotor included in the permanent magnet synchronous motor.
Methods for detecting the position of the magnetic pole of the rotor include a method for using a magnetic flux sensor to measure a current and a method for applying voltage vectors to estimate the position of the magnetic pole of the rotor. Detecting the position of the magnetic pole of the rotor using the magnetic flux sensor has disadvantage of increasing a manufacturing cost and size of the motor because the magnetic flux sensor should be additionally mounted on the motor. Further, using the magnetic flux sensor increases the maintenance cost and degrades the reliability of the operating system of the motor, due to a sensor failure and the like.
On the other hand, in the method for applying voltage vectors to estimate the position of the magnetic pole of the rotor, a point where a magnitude of a current becomes larger due to the influence of the magnetic flux of a permanent magnet thereon when the voltage vectors are applied into the motor is estimated as the position of the magnetic pole of the rotor. However, this method requires applying the voltage vectors at different angles in order to identify the point where the magnitude of the current becomes larger. Therefore, there is a problem that the time and the power consumption needed to estimate the position of the magnetic pole increase with the number of times the voltage vectors are applied.

**SUMMARY**

It is an object of the present disclosure to provide a method for exactly detecting an initial position of a magnetic pole of a rotor included in a permanent magnet synchronous motor without using a separate magnetic flux sensor.
It is another object of the present disclosure to provide a method for exactly detecting an initial position of a magnetic pole of a rotor included in a permanent magnet synchronous motor, in a manner of reducing the number of times the voltage vectors are applied onto the stator winding in detecting the initial position of the magnetic pole of the rotor, compared to a prior art, thereby saving the time and the power consumption required to detect the initial position of the magnetic pole of the rotor.
In order to achieve the objects of the present disclosure, a method is provided for detecting an initial position of a magnetic pole of a rotor in permanent magnet synchronous motor, the method comprising: generating three-phase voltage vectors to be applied onto a u-phase, a v-phase, and a w-phase of a stator winding; applying the three-phase voltage vectors onto the u-phase, the v-phase, and the w-phase of a stator winding, respectively; calculating a current difference value in the u-phase, a current difference value in the v-phase, and a current difference value in the w-phase using currents of the stator winding flowing in a magnetizing direction and in a un-magnetizing direction by applying the three-phase voltage vectors; and determining the initial position of the magnetic pole of the rotor using the current difference value in the u-phase, the current difference value in the v-phase, and the current difference value in the w-phase.
The objects of the present disclosure are not limited to the foregoing. Other objects and advantages of the present disclosure not disclosed herein can be appreciated from the following description and will clearly be understood by way of embodiments of the present disclosure. Further, it will become apparent that the objects and the advantages of the present disclosure can readily be realized by the means and the combination thereof as defined the claims.
The present disclosure as described above has an advantage of exactly detecting the initial position of the magnetic pole of the rotor included in the permanent magnet synchronous motor without using a magnetic flux sensor.
Further, the present disclosure is advantageous of reducing the number of times the voltage vectors are applied onto the stator winding in detecting the initial position of the magnetic pole of the rotor, compared to a prior art, thereby saving the time and the power consumption required to detect the initial position of the magnetic pole of the rotor.

**2**

**BRIEF DESCRIPTION OF THE DRAWINGS**

The above and other aspects, features and advantages of the present disclosure will become apparent from the following description of exemplary embodiments given in conjunction with the accompanying drawings, in which:

FIG. 1 is a diagram illustrating a model of a permanent magnet motor;
FIG. 2 is a block diagram of an apparatus for detecting an initial position of a magnetic pole of a rotor in the permanent magnet motor according to a prior art;
FIG. 3 is a flowchart illustrating a method for detecting the initial position of the magnetic pole of the rotor in the permanent magnet motor according to the prior art;
FIG. 4 is a diagram illustrating an equivalent model of vectors which are applied into the permanent magnet motor when detecting the initial position of the magnetic pole of the rotor in the permanent magnet motor according to the prior art;
FIG. 5 is a bock diagram of an apparatus for detecting the initial position of the magnetic pole of the rotor in the permanent magnet motor according to an embodiment of the present disclosure;
FIG. 6 is a flowchart of the method for detecting the initial position of the magnetic pole of the rotor in the permanent magnet motor according to an embodiment of the present disclosure; and
FIG. 7 is a diagram illustrating an equivalent model of vectors which are applied into the permanent magnet motor when detecting the initial position of the magnetic pole of the rotor in the permanent magnet motor according to an embodiment of the present disclosure.

**DETAILED DESCRIPTION**

The above objects, features, and advantages will be described in detail with reference to the accompanying drawings and therefore, the technical ideas of the present disclosure can be easily practiced by a person with ordinary skill in the art to which the present disclosure pertains. Further, when it is determined that the detailed description of the known art related to the present disclosure may obscure the gist of the present disclosure, the detailed description thereof will be omitted. Hereinafter, embodiments of the present disclosure will be described in detail with reference to the accompanying drawings. Throughout the disclosure, like reference numerals refer to like parts throughout the various figures and embodiments of the present disclosure.

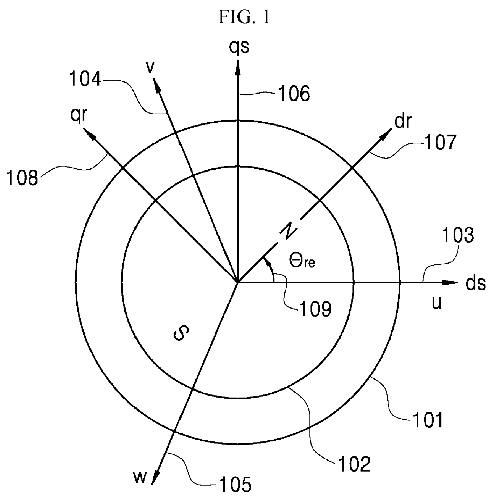

FIG. 1 shows a diagram of a model of a permanent magnet motor. Referring to FIG. 1, the permanent magnet motor includes a stator winding 101 and a rotor winding 102. Three axes, i.e., a u-axis 103, a v-axis 104, and a w-axis 105, of the stator winding 101 of the permanent magnet motor may be represented by a ds-axis 103 and a qs-axis 106 through the coordinate transforms, respectively. Further, axes of the rotor winding 102 may be represented by a dr-axis 107 and a qr-axis 108, respectively.

In FIG. 1, a $\theta_{re}$ may represent an angle between the ds-axis 103 as the d-axis of the stator winding 101 and the dr-axis 107 as the d-axis of the rotor winding 102. Typically, the dr-axis 107 of the rotor winding 102 moves in connection with an N-pole of a rotor. Accordingly, an initial position of a magnetic pole of the rotor may be represented as the $\theta_{re}$.

Further, in a prior art, the initial position of the magnetic pole of the rotor is detected according to the following principle. Applying voltage vectors onto the stator winding 101 allows a current to flow in the stator winding 101. At this time, a stator winding core exhibits a non-linear magnetizing property, where a stator winding core positioned close to the rotor magnetic pole is more heavily magnetized relative to that positioned farther to the rotor magnetic pole. If the stator winding 101 is positioned close to the rotor magnetic pole, the stator winding 101 exhibits a higher absolute value in the current flowing in a magnetizing direction than in a un-magnetizing direction due to a saturation in the magnetic pole of the stator winding core. It is therefore possible to estimate how close to the rotor magnetic pole the stator winding 101 onto which a voltage vector is applied is positioned based on a difference between the absolute value of the current of the stator winding 101 flowing in the magnetizing direction and the absolute value of the current of the stator winding 101 flowing in the un-magnetizing direction.

Thus the prior art adjusts angles of the voltage vectors to apply the voltage vectors onto different positions of the stator winding 101 and then estimates, as the initial position of the magnetic pole of the rotor, a position where the difference between the absolute values of the currents of the stator winding 101 flowing the magnetizing/un-magnetizing directions is largest.

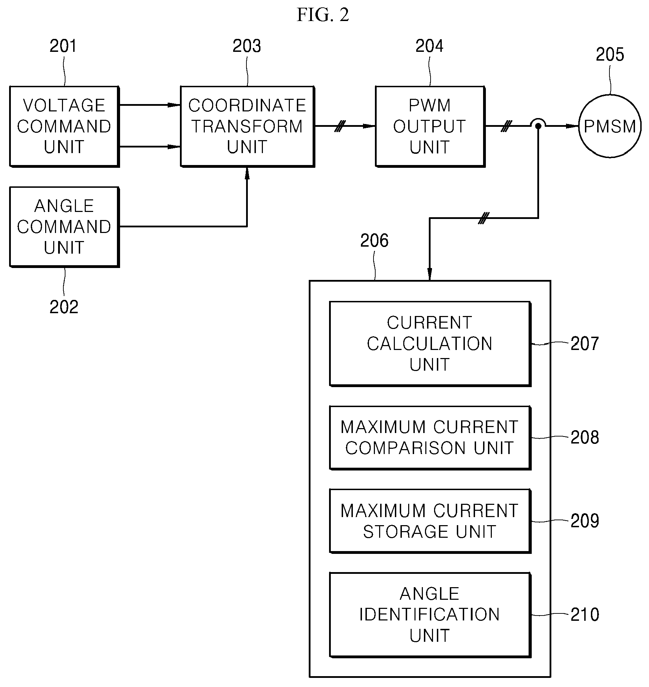

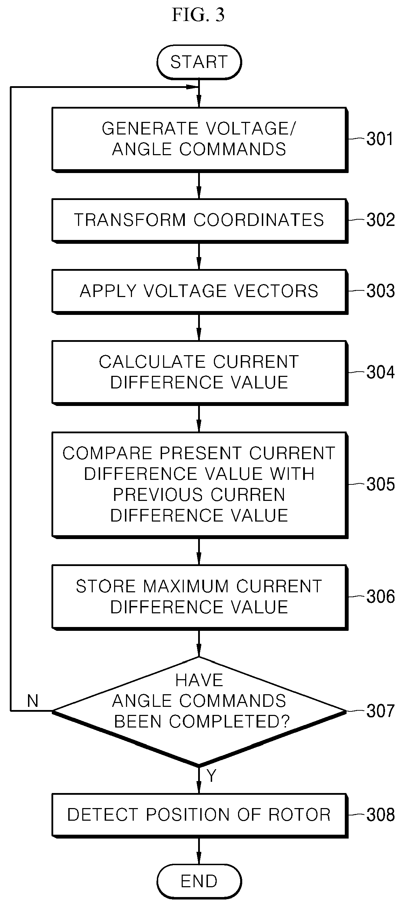

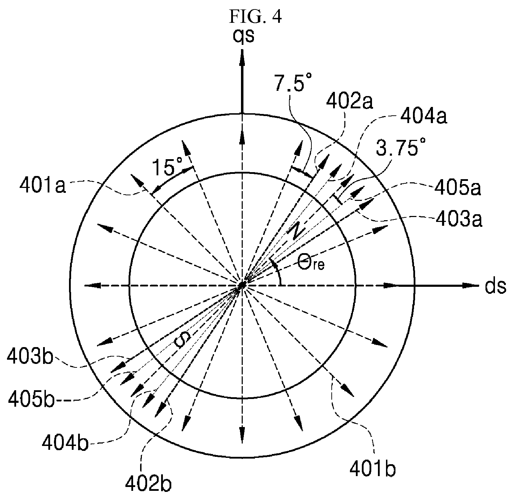

FIG. 2 is a block diagram of an apparatus for detecting the initial position of the magnetic pole of the rotor in the permanent magnet motor according to the prior art, and FIG. 3 is a flowchart of a method for detecting the initial position of the magnetic pole of the rotor in the permanent magnet motor according to the prior art. Further, FIG. 4 is a diagram illustrating an equivalent model of vectors which are applied into the permanent magnet motor when detecting the initial position of the magnetic pole of the rotor in the permanent magnet motor according to the prior art. Hereinafter, detecting the initial position of the magnetic pole of the rotor in the permanent magnet motor according to the prior art will be described with reference to FIGS. 2 to 4.

As shown in FIG. 2, the apparatus for detecting the initial position of the magnetic pole of the rotor in the permanent magnet motor 205 according to the prior art includes a voltage command unit 201, an angle command unit 202, a coordinate transform unit 203, a PWM output unit 204, and a rotor position detection unit 206. In addition, the rotor position detection unit 206 includes a current calculation unit 207, a maximum current comparison unit 208, a maximum current storage unit 209, and an angle identification unit 210.

Referring to FIG. 3, first, the voltage command unit 201 and the angle command unit 202 respectively generate a voltage command and an angle command constituting voltage vectors which are to be applied onto the stator winding (301). In particular, the voltage command unit 201 generates a d-axis voltage command and a q-axis voltage command in order to generate the voltage vectors which are to be applied onto a u-phase, a v-phase, and a w-phase of a stator in the permanent magnet motor 205. The angle command unit 202 generates an angle command to be applied to voltage vectors which are to be applied onto the u-phase, the v-phase, and the w-phase of the stator in the permanent magnet motor 205, wherein the angle command can be generated such that angle differences between two of the voltage vectors are respectively 15°, 7.5°, 3.75° and so on, as shown in FIG. 4.

At this time, the d-axis voltage command to be generated by the voltage command unit 201 may be generated to be a voltage command having any predetermined magnitude and the q-axis voltage command may be generated to be equal to 0. The d-axis voltage command $V_{dss}^*$ and the q-axis voltage command $V_{qss}^*$ generated by the voltage command unit 201 and the angle command unit 202 may be represented as follows:

[Equation 1]

$$v_{dss}^* = v_{dse}^* \cos\theta - v_{qse}^* \sin\theta \approx v_{dse}^* \cos\theta$$

$$v_{qss}^* = v_{dse}^* \sin\theta + v_{qse}^* \cos\theta \approx v_{dse}^* \sin\theta$$

Then, the coordinate transform unit 203 transforms the d-axis voltage command $V_{dss}^*$ and the q-axis voltage command $V_{qss}^*$ by the voltage command unit 201 and the angle command unit 202 into a three-phase coordinate system to generate three-phase voltage vectors as follows (302): [Equation 2]

$$v_{us}^* = v_{dss}^* \approx v_{dse}^* \cos\theta$$

$$v_{vs}^* = -\frac{1}{2}v_{dss}^* + \frac{\sqrt{3}}{2}v_{qss}^* \approx \left(-\frac{1}{2}\cos\theta + \frac{\sqrt{3}}{2}\sin\theta\right)v_{dse}^* = v_{dse}^* \cos\left(\theta - \frac{2\pi}{3}\right)$$

$$v_{ws}^* = -\frac{1}{2}v_{dss}^* - \frac{\sqrt{3}}{2}v_{qss}^* \approx \left(-\frac{1}{2}\cos\theta - \frac{\sqrt{3}}{2}\sin\theta\right)v_{dse}^* = v_{dse}^* \cos\left(\theta + \frac{2\pi}{3}\right)$$

The three-phase voltage vectors $V_{us}^*$, $V_{vs}^*$, and $V_{ws}^*$ generated by the coordinate transform unit 203 are input to the PWM output unit 204, and the PWM output unit 204 applies the three-phase voltage vectors into the permanent magnet motor 205 in a form of PWM signal (303). In this case, the three-phase voltage vectors may be applied in a magnetizing direction 401a and an un-magnetizing direction 401b.

Applying the three-phase voltage vectors into the permanent magnet motor 205 allows a current to flow in the stator winding 101 of the permanent magnet motor 205. The current calculation unit 207 calculates absolute values of the magnitudes of the respective currents flowing in the magnetizing direction 401a and the un-magnetizing direction 401b and then calculates a difference between these absolute values, i.e., a current difference value (304). Hereinafter, the difference between the absolute value of the magnitude of the magnetizing direction 401a current and the absolute value of the magnitude of the un-magnetizing direction 401b current is defined as the "current difference value."

The maximum current comparison unit 208 compares a presently calculated current difference value with a previously calculated current difference value (305). The larger of the compared current difference values is stored on the maximum current storage unit 209 (306). This process continues until the voltage vectors have been applied at intervals of 15° throughout the whole area of the stator winding as shown in FIG. 4. Accordingly, the angle identification unit 210 determines whether the adjustment of the angle command has been completed in order to ascertain whether the voltage vectors have been applied throughout the whole area of the stator winding (307). Steps 301 to 306 are repeated until the voltage vectors have been applied throughout the whole area of the stator winding.

In FIG. 4, when the voltage vectors have been applied at intervals of 15° throughout the whole area of the stator winding and the calculation of the current difference value has been completed, a voltage vector having a maximum current difference value, i.e., a first voltage vector, may be identified. Thereafter, the voltage command unit 201 and the angle command unit 202 generate voltage commands having angle offsets of $\pm 7.5°$ from the first voltage vector and thus two voltage vectors are applied onto the stator winding. The rotor position detection unit 206 measures the absolute values of the magnetizing direction (402a or 403a) and un-magnetizing direction (402b or 403b) currents by the two voltage vectors and calculates differences between these absolute values, i.e., the current difference values, respectively. A voltage vector exhibiting the larger of thus calculated two current difference values is identified as a second voltage vector.

Thereafter, the voltage command unit 201 and the angle command unit 202 generate voltage commands having angle offsets of $\pm 3.75°$ from the second voltage vector and thus two voltage vectors are applied onto the stator winding. The rotor position detection unit 206 measures the absolute values of the magnetizing direction (404a or 405a) and un-magnetizing direction (404b or 405b) currents by the two voltage vectors and calculates differences between these absolute values, i.e., the current difference values, respectively. A voltage vector exhibiting the larger of thus calculated two current difference values is identified as a third voltage vector. The rotor position detection unit 206 decides, as the initial position of the magnetic pole of the rotor, an angle of $\theta_{re}$ which the third voltage vector forms with respect to the ds-axis (308).

However, according to the prior art as described above, the angle adjustments of the voltage vectors and thus repeated applications thereof are required, and hence the time required to detect the initial position of the magnetic pole of the rotor increases and the power consumption also increases. For example, according to embodiments of FIGS. 2 to 4, a total of twenty times of the application of the voltage vectors and thus calculation of current difference value are made by the angle adjustments.

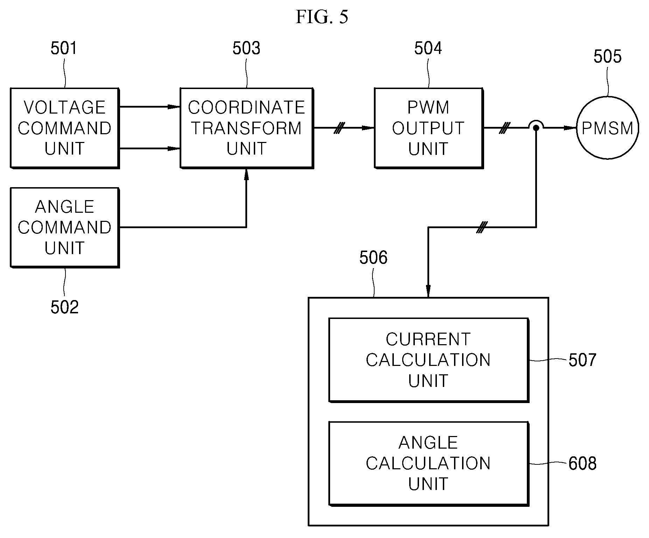

The present disclosure is to overcome the above-problems, and the object thereof is to reduce the number of times the voltage vectors are applied onto the stator winding, thereby saving the time and the power consumption required to detect the initial position of the magnetic pole of the rotor. Hereinafter, a method for detecting the initial position of the magnetic pole of the rotor in the permanent magnet motor according to an embodiment of the present disclosure will specifically be described with reference to FIGS. 5 to 7.

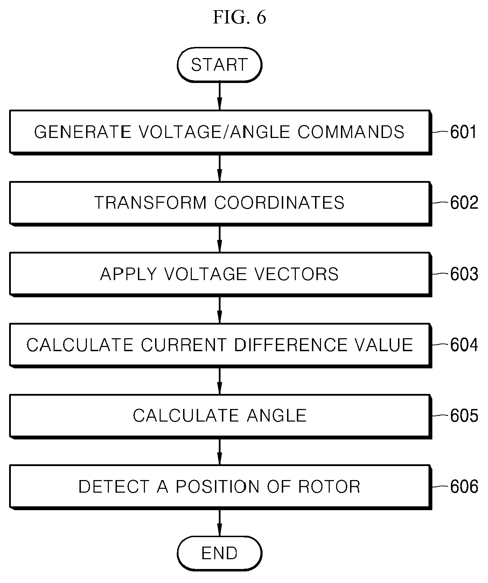

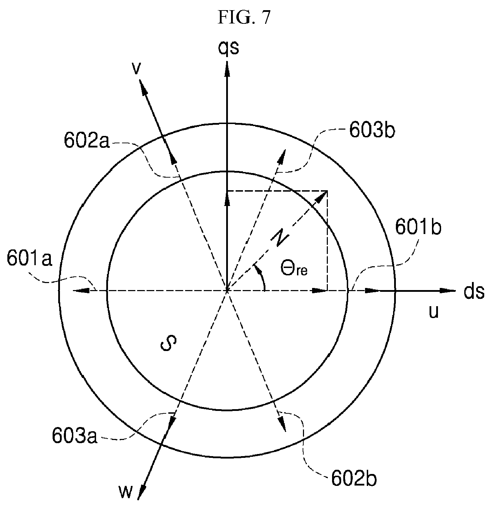

FIG. 5 is a bock diagram of an apparatus for detecting the initial position of the magnetic pole of the rotor in the permanent magnet motor according to an embodiment of the present disclosure; and FIG. 6 is a flowchart of the method for detecting the initial position of the magnetic pole of the rotor in the permanent magnet motor according to an embodiment of the present disclosure. Further, FIG. 7 is a diagram illustrating an equivalent model of vectors which are applied onto the permanent magnet motor when detecting the initial position of the magnetic pole of the rotor in the permanent magnet motor according to an embodiment of the present disclosure.

First, referring to FIG. 5, the apparatus for detecting the initial position of the magnetic pole of the rotor in the permanent magnet motor according to an embodiment of the present disclosure includes a voltage command unit 501, an angle command unit 502, a coordinate transform unit 503, a PWM output unit 504, and a rotor position detection unit 506. In addition, the rotor position detection unit 506 includes a current calculation unit 507 and an angle calculation unit 508.

Referring to FIG. 6, the voltage command unit 501 and the angle command unit 502 respectively generate a voltage command and an angle command constituting voltage vectors which are to be applied onto the stator winding (601). In particular, the voltage command unit 501 generates a d-axis voltage command and a q-axis voltage command in order to generate the voltage vectors which are to be applied onto a u-phase, a v-phase, and a w-phase of a stator in the permanent magnet motor 505. The angle command unit 502 generates an angle command applied to voltage vectors which are to be applied onto the u-phase, the v-phase, and the w-phase of the stator in the permanent magnet motor 505.

Unlike the prior art, the present disclosure does not generate a number of voltage vectors at certain angle intervals but generates only voltage vectors that are applied onto the u-phase (601a, 601b), the v-phase (602a, 602b), and the w-phase (603a, 603b) as in FIG. 7. Accordingly, the angle command unit 502 adjusts the angle on a 120 ° basis to generate angle commands. Although the angle is adjusted on a 120° basis by the angle command unit 502 in the present embodiment, the angle to be adjusted may be variable dependent on embodiments.

Further, the d-axis voltage command to be generated by the voltage command unit 501 may be generated to be a voltage command having any predetermined magnitude and the q-axis voltage command may be generated to be equal to 0. The d-axis voltage command $V_{dss}^{*}$ and the q-axis voltage command $V_{qss}^{*}$ generated by the voltage command unit 501 and the angle command unit 502 may be represented as the Equation 1 as described above.

The coordinate transform unit 503 transforms the d-axis voltage command $V_{dss}^{*}$ and the q-axis voltage command $V_{qss}^{*}$ generated by the voltage command unit 501 and the angle command unit 502, i.e., synchronous coordinate system voltage vectors, into a three-phase coordinate system voltage vector as indicated in Equation 2 to generate three-phase voltage vectors (602).

The PWM output unit 504 applies the three-phase voltage vectors generated by the coordinate transform unit 503 into the permanent magnet motor 505 in a form of PWM signal (603). As described above, according to the present disclosure, the voltage vectors are respectively applied onto the u-phase, the v-phase, and the w-phase.

The current calculation unit 507 in the rotor position detection unit 506 calculates a current difference value of the u-phase, a current difference value of the v-phase, and a current difference value of the w-phase, respectively (604). For example, the current calculation unit 507 calculates an absolute value of a magnetizing direction 601a current and an absolute value of an un-magnetizing direction 601b current of the u-phase, respectively, and decides a difference between the two absolute values as the current difference value of the u-phase.

Further, the angle calculation unit 508 in the rotor position detection unit 506 determines the initial position of the magnetic pole of the rotor using the current difference value of the u-phase, the current difference value of the v-phase, and the current difference value of the w-phase. In order to determine the initial position of the magnetic pole of the rotor, the angle calculation unit 508 calculates an angle between the d-axis of the stator winding and the d-axis of the rotor winding, i.e., $\theta_{re}$, as follows.

Assuming that command current values respectively applied first onto the u-phase, the v-phase, and the w-phase are I0, the current difference value of the u-phase Iu, the current difference value of the v-phase Iv, and the current difference value of the v-phase Iw may be defined as follows:

[Equation 3]

$$I_{u} = I_{0} \cos \theta_{re},$$

$$I_{v} = I_{0} \cos(\theta_{re} - 2\pi/3),$$

$$I_{w} = I_{0} \cos(\theta_{re} + 2\pi/3)$$

Considering the current difference value of the u-phase Iu, the current difference value of the v-phase Iv, and the current difference value of the w-phase Iw as defined in the Equation 3 above, the $\theta_{re}$ may be rearranged as a tangent term as follows:

[Equation 4]

$$\frac{I_v - I_w}{2I_u - I_v - I_w} = \frac{\sqrt{3}I_0 \sin\theta_{re}}{3I_0 \cos\theta_{re}} = \frac{1}{\sqrt{3}}\tan\theta_{re}$$

Equation 4 may also be rearranged as follows:

[Equation 5]

$$\tan\theta_{re} = \frac{\sqrt{3}(I_v - I_w)}{2I_u - I_v - I_w}$$

Based on Equation 5, the $\theta_{re}$ may be obtained as follows: [Equation 6]

$$\theta_{re} = \arctan\left(\frac{\sqrt{3}(I_v - I_w)}{2I_u - I_v - I_w}\right)$$

The angle calculation unit 508 according to an embodiment of the present disclosure calculates an angle between the d-axis of the stator winding and the d-axis of the rotor winding, i.e., $\theta_{re}$, using the current difference value of the u-phase Iu, the current difference value of the v-phase Iv, and the current difference value of the w-phase Iw as indicated in Equation 6, and decides the calculated $\theta_{re}$ as the initial position of the magnetic pole of the rotor.

As such, according to the method of the present disclosure for detecting the initial position of the magnetic pole of the rotor, it is possible to detect the initial position of the magnetic pole of the rotor by the reduced number of the voltage vector application and the calculation, compared to the prior art.

The present invention described above may be variously substituted, altered, and modified by those skilled in the art without departing from the scope and sprit of the present invention. Therefore, the present invention is not limited to the above-mentioned exemplary embodiments and the accompanying drawings.

**Claims**

1.  A method for detecting an initial position of a magnetic pole of a rotor in a permanent magnet synchronous motor, the motor comprising a stator and a rotor, the method comprising:

    generating three-phase voltage vectors to be applied onto a u-phase, a v-phase, and a w-phase of a stator winding;
    applying the three-phase voltage vectors onto the u-phase, the v-phase, and the w-phase of a stator winding, respectively;
    calculating a current difference value in the u-phase, a current difference value in the v-phase, and a current difference value in the w-phase using currents of the stator winding flowing in a magnetizing direction and in a un-magnetizing direction by applying the three-phase voltage vectors; and
    determining the initial position of the magnetic pole of the rotor using the current difference value in the u-phase, the current difference value in the v-phase, and the current difference value in the w-phase.

2.  The method according to claim 1, wherein the initial position of the magnetic pole is determined by an angle made between a d-axis of the stator and a d-axis of the rotor winding.

3.  The method according to claim 1, wherein the generating three-phase voltage vectors comprises:

generating voltage commands including a d-axis voltage command and a q-axis voltage command of the stator winding;

generating angle commands to be applied to the three-phase voltage vectors;

generating synchronous coordinate system voltage vectors using the voltage commands and the angle commands; and

transforming the synchronous coordinate system voltage vectors into a three-phase coordinate system voltage vector to generate the three-phase voltage vectors.

4. The method according to claim 1, wherein the calculating the current difference value comprises:

deciding a difference between an absolute value of a current flowing in the magnetizing direction and an absolute value of a current flowing in the un-magnetizing direction as the current difference value.

5. The method according to claim 1, wherein the initial position of the magnetic pole is determined as follows:

$$\theta_{re} = \arctan\left(\frac{\sqrt{3}(I_v - I_w)}{2I_u - I_v - I_w}\right)$$

where $\theta_{re}$ is an angle formed between a d-axis of the stator and a d-axis of the rotor winding, IU is the current difference value in the u-phase, IV is the current difference value in the v-phase, and IW is the current difference value in the w-phase.

FIG. 1

FIG. 2

FIG. 3

START

GENERATE VOLTAGE/
ANGLE COMMANDS —301

TRANSFORM COORDINATES —302

APPLY VOLTAGE VECTORS —303

CALCULATE CURRENT
DIFFERENCE VALUE —304

COMPARE PRESENT CURRENT
DIFFERENCE VALUE WITH
PREVIOUS CURREN
DIFFERENCE VALUE —305

STORE MAXIMUM CURRENT
DIFFERENCE VALUE —306

HAVE
ANGLE COMMANDS
BEEN COMPLETED? —307

N

Y

DETECT POSITION OF ROTOR —308

END

FIG. 4

FIG. 5

FIG. 6

START

GENERATE VOLTAGE/ANGLE COMMANDS — 601

TRANSFORM COORDINATES — 602

APPLY VOLTAGE VECTORS — 603

CALCULATE CURRENT DIFFERENCE VALUE — 604

CALCULATE ANGLE — 605

DETECT A POSITION OF ROTOR — 606

END

FIG. 7

Europäisches
Patentamt

European
Patent Office

Office européen
des brevets

# EUROPEAN SEARCH REPORT

Application Number

EP 16 15 0922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 290 807 A2 (HITACHI IND EQUIPMENT SYS [JP]) 2 March 2011 (2011-03-02) * paragraph [0004] - paragraph [0076]; figures 1-19 * ----- | 1-5 | INV. H02P21/18 H02P21/34 H02P21/32 |
| X | US 2011/101900 A1 (BASIC DURO [AU] ET AL) 5 May 2011 (2011-05-05) * paragraphs [0008] - [0010], [0028] - paragraph [0039]; figures 1,5 * ----- | 1,2,4 | |

TECHNICAL FIELDS
SEARCHED      (IPC)

H02P

The present search report has been drawn up for all claims

| Place of search | Date of completion of the search | Examiner |
|---|---|---|
| Munich | 3 August 2016 | Jonda, Sven |

EPO FORM 1503 03.82 (P04C01)

## ANNEX TO THE EUROPEAN SEARCH REPORT
## ON EUROPEAN PATENT APPLICATION NO.

EP 16 15 0922

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2016

| Patent document cited in search report | | Publication date | Patent family member(s) | | Publication date |
|---|---|---|---|---|---|
| EP 2290807 | A2 | 02-03-2011 | CN | 102005996 A | 06-04-2011 |
| | | | EP | 2290807 A2 | 02-03-2011 |
| | | | JP | 5150585 B2 | 20-02-2013 |
| | | | JP | 2011050198 A | 10-03-2011 |
| | | | US | 2011050140 A1 | 03-03-2011 |
| US 2011101900 | A1 | 05-05-2011 | CN | 102077458 A | 25-05-2011 |
| | | | EP | 2294688 A1 | 16-03-2011 |
| | | | FR | 2933550 A1 | 08-01-2010 |
| | | | JP | 5431465 B2 | 05-03-2014 |
| | | | JP | 2011526479 A | 06-10-2011 |
| | | | US | 2011101900 A1 | 05-05-2011 |
| | | | WO | 2010000640 A1 | 07-01-2010 |

EPO FORM P0459

For more details about this annex : see Official Journal of the European Patent Office, No. 12/82